# EUROPEAN PATENT APPLICATION

(11) **EP 4 730 379 A1**
(43) Date of publication of application: **22.04.2026**
(21) Application number: 24842803.9
(22) Date of filing: 08.05.2024
(51) Int. Cl.: H01G 4/30

(54) **MULTILAYER CERAMIC CAPACITOR**

(30) Priority: 19.07.2023 JP 2023117661
(71) Applicant: Murata Manufacturing Co., Ltd., Nagaokakyo-shi, Kyoto 617-8555 (JP)
(72) Inventor: KASAHARA, Masahiro, Nagaokakyo-shi, Kyoto 617-8555 (JP); SHIMADA, Yasuyuki, Nagaokakyo-shi, Kyoto 617-8555 (JP); IWATA, Shun, Nagaokakyo-shi, Kyoto 617-8555 (JP)
(74) Representative: Zimmermann, Tankred Klaus
(86) International application number: PCT/JP2024/017065
(87) International publication number: WO 2025/018006

(57) **Abstract**

The present invention makes it possible to provide a multilayer ceramic capacitor having high reliability while achieving high capacity. In a multilayer ceramic capacitor (1), a laminate (2) has: an inner layer part (10) in which a plurality of first internal electrode layers (6a) and a plurality of second internal electrode layers (6b) face each other; and an outer layer part formed from a dielectric material. When the length in a direction parallel to the lamination direction (T) of the inner layer part (10) at the central position of the inner layer part (10) in the width direction (W) is defined as a first length, and when the length in the direction parallel to the lamination direction (T) of the inner layer part (10), at a position at which the length from a width-direction (W) end portion of the inner layer part (10) in a direction parallel to the other width-direction (W) end portion of the inner layer part (10) in the width direction (W) is 0.3-8.0% of the length of the inner layer part (10) in the width direction (W), is defined as a second length, the second length is longer than the first length.

## Description

### TECHNICAL FIELD

The present invention relates to a multilayer ceramic capacitor.

### BACKGROUND ART

When manufacturing a multilayer ceramic capacitor, a plurality of dielectric sheets are prepared, and these dielectric sheets are stacked. In recent years, multilayer ceramic capacitors have been developed with thinner and more abundant layers of dielectric sheets in order to achieve a reduction in size and higher capacitance. Furthermore, in order to improve the durability of multilayered multilayer ceramic capacitors, Patent Document 1 discloses a technique for including a glass component in external electrodes.

### Citation List

### Patent Document

Patent Document 1: Japanese Unexamined Patent Application, Publication No. 2001-267173

### DISCLOSURE OF THE INVENTION

### Problems to be Solved by the Invention

However, with the progression of thinning and increasing layers of the dielectric sheets, the durability may decrease, particularly at the end portions of the internal electrode layers. Examples of decreased durability include the following. When manufacturing a multilayer ceramic capacitor, the stacked dielectric sheets are pressed. This pressing may cause the dielectric layers to become thinner at the end portions of the internal electrode layers. On the other hand, at the end portions of the internal electrode layers, the electric field strength becomes greater compared to other portions of the internal electrode layers due to the edge effect. Therefore, electric field concentration occurs at the end portions of the internal electrode layers where the dielectric layers are thin, resulting in dielectric breakdown.

This decrease in durability becomes more problematic when attempting to achieve higher capacitance. This is because the thickness of the dielectric layers is made even thinner in order to increase capacitance.

Therefore, it is an object for the present invention to provide multilayer ceramic capacitors each having high reliability, while also achieving high capacitance.

### Means for Solving the Problems

An embodiment of the present invention provides a multilayer ceramic capacitor which includes a multilayer body including a plurality of dielectric layers that are laminated, a plurality of first internal electrode layers and a plurality of second internal electrode layers each laminated on a corresponding one of the plurality of dielectric layers, a first main surface and a second main surface opposed to each other in a lamination direction, a first end surface and a second end surface opposed to each other in a length direction perpendicular to the lamination direction, and a first lateral surface and a second lateral surface opposed to each other in a width direction perpendicular to the lamination direction and the length direction, a first external electrode on the first end surface, and a second external electrode on the second end surface. The multilayer body includes an inner layer portion where the plurality of first internal electrode layers and the plurality of second internal electrode layers are opposed to each other, and outer layer portions each made of dielectric material. When defining a length in a direction parallel to the lamination direction of the inner layer portion at a middle position in the width direction of the inner layer portion as a first length, and defining a length in a direction parallel to the lamination direction of the inner layer portion at a position where a length from an end portion in the width direction of the inner layer portion in a direction parallel to one other end portion in the width direction of the inner layer portion is 0.3% or more and 8.0% or less of a length in the width direction of the inner layer portion as a second length, the second length is longer than the first length.

### Effects of the Invention

According to an embodiment of the present invention, it is possible to provide multilayer ceramic capacitors that are each able to facilitate improvement in capacitance and improvement in reliability.

### BRIEF DESCRIPTION OF THE DRAWINGS

FIG. 1 is a perspective view of a multilayer ceramic capacitor according to an embodiment of the present embodiment.
FIG. 2 is a cross-sectional view taken along the line I-I in FIG. 1.
FIG. 3 is a cross-sectional view taken along the line II-II in FIG. 1.
FIG. 4 is a cross-sectional view taken along the line III-III in FIG. 1.
FIG. 5A is a diagram showing a state where electrically conductive paste and level difference reduction paste are printed on a dielectric sheet.
FIG. 5B is a diagram showing two dielectric sheets 40 to be laminated.
FIG. 6 is a cross-sectional view taken along the line W-W' in FIG. 5A.

### PREFERRED MODE FOR CARRYING OUT THE INVENTION

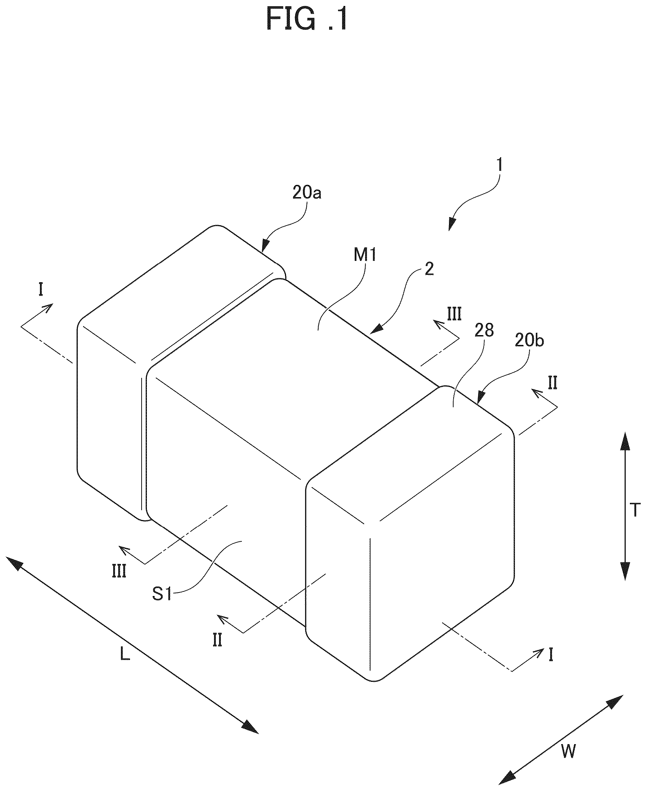

An embodiment of the present invention will be described based on FIG. 1. FIG. 1 is a perspective view of a multilayer ceramic capacitor 1 according to an embodiment of the present invention.

### (Multilayer Body)

A multilayer body 2 includes a plurality of laminated dielectric layers and a plurality of internal electrode layers. The multilayer body 2 has an approximately rectangular parallelepiped shape. In the multilayer body 2, the direction in which the dielectric layers and the internal electrode layers are laminated is defined as the lamination direction T. A direction perpendicular to the lamination direction T is defined as the width direction W. A direction perpendicular to the lamination direction T and the width direction W is defined as the length direction L.

In the multilayer body 2, one of the two surfaces opposed to each other in the lamination direction T is defined as a first main surface M1. The other one is defined as a second main surface M2. In the multilayer body 2, one of the two surfaces opposed to each other in the width direction W is defined as a first lateral surface S1. The other one is defined as a second lateral surface S2. In the multilayer body 2, one of the two surfaces opposed to each other in the length direction L is defined as a first end surface E1. The other one is defined as a second end surface E2. The mounting surface of the multilayer ceramic capacitor 1 is the second main surface M2. The mounting surface refers to a surface that faces a wiring board or the like when the multilayer ceramic capacitor 1 is mounted on the wiring board or the like.

With respect to the cross section of the multilayer body 2, the cross section along the line I-I in FIG. 1 is defined as an LT cross section. With respect to the cross section of the multilayer body 2, the cross section along the line II-II in FIG. 1 is defined as a WT cross section. With respect to the cross section of the multilayer body 2, the cross section along the line III-III in FIG. 1 is defined as a LW cross section.

The corner portions and the ridge portions of the multilayer body 2 are preferably rounded. Each of the corner portions refers to a portion where three surfaces of the multilayer body 2 intersect with each other. Each of the ridge portions refers to a portion where two surfaces of the multilayer body 2 intersect with each other. Irregularities or the like may be provided on a portion or all of the main surfaces, lateral surfaces, and end surfaces.

### (Dielectric Layer)

The total number of dielectric layers laminated in the multilayer body 2 is preferably fifteen or more and 2000 or less. The main material of the dielectric layer is a ceramic material. Examples of the ceramic material include dielectric ceramics having BaTiO₃, CaTiO₃, SrTiO₃, CaZrO₃, or the like as a main component. The ceramic material may be a dielectric ceramic in which secondary components such as Mn compounds, Fe compounds, Cr compounds, Co compounds, Ni compounds, and the like are added to these main components.

The thickness of one dielectric layer is preferably 0.5 µm or more and 10 µm or less.

### (Division of Multilayer Body)

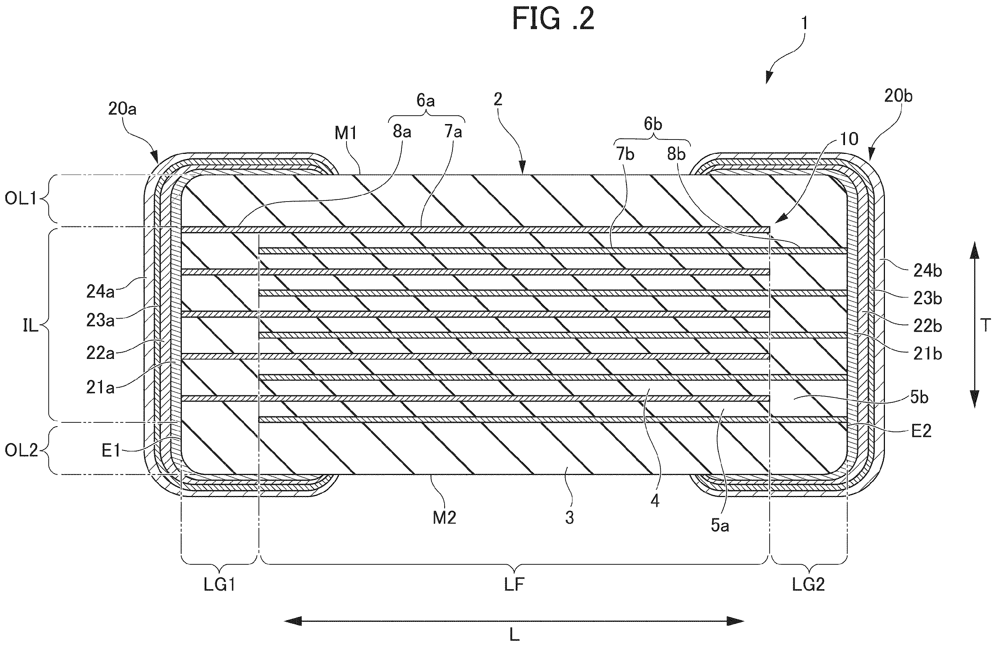

Based on FIG. 2, the divisions of the multilayer body 2 in the length direction L will be described. FIG. 2 is a cross-sectional view taken along the line I-I in FIG. 1. The multilayer body 2 can be divided in the lamination direction T into a first main surface-side outer layer portion OL1, an inner layer range IL, and a second main surface-side outer layer portion OL2. The first main surface-side outer layer portion OL1, the inner layer range IL, and the second main surface-side outer layer portion OL2 are provided adjacent to each other in this order from the first main surface M1 toward the second main surface M2 in the lamination direction T.

The first main surface-side outer layer portion OL1 is a portion between an internal electrode layer closest to the first main surface M1 and the first main surface M1. The inner layer range IL is a range where internal electrode layers are opposed to each other. The second main surface-side outer layer portion OL2 is a portion between an internal electrode layer closest to the second main surface M2 and the second main surface M2.

The first main surface-side outer layer portion OL1 is located adjacent to the first main surface M1 of the multilayer body 2. The first main surface-side outer layer portion OL1 includes an aggregate of a plurality of dielectric layers located between the first main surface M1 and the internal electrode layer closest to the first main surface M1. The first main surface-side outer layer portion OL1 includes a plurality of dielectric layers located between the first main surface M1, and the outermost surface of the inner layer range IL adjacent to the first main surface M1 and an extension line from the outermost surface.

The second main surface-side outer layer portion OL2 is located adjacent to the second main surface M2 of the multilayer body 2. The second main surface-side outer layer portion OL2 includes an aggregate of a plurality of dielectric layers located between the second main surface M2 and the internal electrode layer closest to the second main surface M2. The second main surface-side outer layer portion OL2 includes a plurality of dielectric layers located between the second main surface M2, and the outermost surface of the inner layer range IL adjacent to the second main surface M2 and an extension line from the outermost surface.

The inner layer range IL is a range sandwiched between the first main surface-side outer layer portion OL1 and the second main surface-side outer layer portion OL2.

Among the dielectric layers, dielectric layers located in the first main surface-side outer layer portion OL1 and the second main surface-side outer layer portion OL2 are defined as outer dielectric layers 3. Among the dielectric layers, dielectric layers located in the inner layer range IL are defined as inner dielectric layers 4.

In the description of lengths and positions, the following terms are used. A length in the length direction L is defined as a length direction dimension. A length in the width direction W is defined as a width direction dimension. A length in the lamination direction T is defined as a lamination direction dimension. A position that is half the length direction dimension is defined as a middle position in the length direction L. The middle position in the length direction L is defined as a length direction middle position. A position that is half the width direction dimension is defined as a middle position in the width direction W. The middle position in the width direction W is defined as a width direction middle position. A position that is half the lamination direction dimension is defined as a middle position in the lamination direction T. The middle position in the lamination direction T is defined as a lamination direction middle position. An end portion in the length direction L is defined as a length direction end portion. An end portion in the width direction W is defined as a width direction end portion. An end portion in the lamination direction T is defined as a lamination direction end portion.

The size of the multilayer body 2 is not particularly limited. The length direction dimension of the multilayer body is preferably 0.2 mm or more and 10 mm or less. The width direction dimension of the multilayer body 2 is preferably 0.1 mm or more and 5 mm or less. The lamination direction dimension of the multilayer body 2 is preferably 0.1 mm or more and 5 mm or less.

### (L gap)

The divisions of the multilayer body 2 in the length direction L will be explained. The multilayer body 2 can be divided in the length direction L into a first end surface-side outer layer portion LG1, a length direction counter portion LF, and a second end surface-side outer layer portion LG2. The first end surface-side outer layer portion LG1, the length direction counter portion LF, and the second end surface-side outer layer portion LG2 are provided adjacent to each other in this order from the first end surface E1 toward the second end surface E2 in the length direction L.

The length direction counter portion LF is a portion where the first internal electrode layers 6a and the second internal electrode layers 6b are opposed to each other in the lamination direction T. The first end surface-side outer layer portion LG1 is a portion between the length direction counter portion LF and the first end surface E1. The second end surface-side outer layer portion LG2 is a portion between the length direction counter portion LF and the second end surface E2. The length direction counter portion LF is a portion corresponding to the counter electrode portions of the internal electrode layers. The first end surface-side outer layer portion LG1 and the second end surface-side outer layer portion LG2 are portions corresponding to the extension electrode portions of the internal electrode layers. The first end surface-side outer layer portion LG1 and the second end surface-side outer layer portion LG2 are also referred to as L gap.

The first end surface-side outer layer portion LG1 is located adjacent to the first end surface E1. The first end surface-side outer layer portion LG1 is located between the first end surface E1 and the outermost surface of the end portion of each of the second internal electrode layers 6b adjacent to the first end surface E1.

The second end surface-side outer layer portion LG2 is located adjacent to the second end surface E2. The second end surface-side outer layer portion LG2 is located between the second end surface E2 and the outermost surface of the end portion of each of the first internal electrode layers 6a adjacent to the second end surface E2.

### (W Gap)

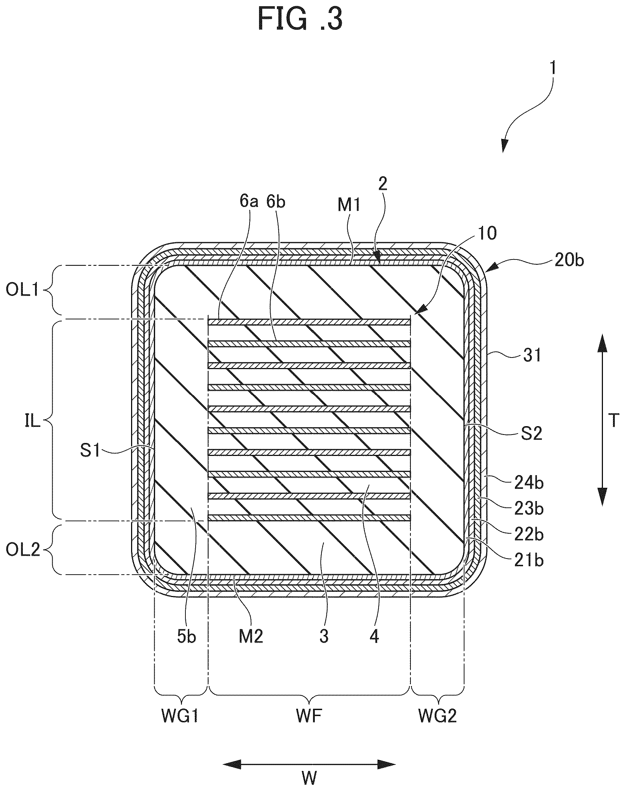

The divisions of the multilayer body 2 in the width direction W will be described based on FIG. 3. FIG. 3 is a cross-sectional view taken along the line II-II in FIG. 1. The multilayer body 2 can be divided in the width direction W into a first lateral surface-side outer layer portion WG1, a width direction counter portion WF, and a second lateral surface-side outer layer portion WG2. The first lateral surface-side outer layer portion WG1, the width direction counter portion WF, and the second lateral surface-side outer layer portion WG2 are provided adjacent to each other in this order from the first lateral surface S1 toward the second lateral surface S2 in the width direction W.

The width direction counter portion WF is a portion where internal electrode layers are opposed to each other in the lamination direction T. The first lateral surface-side outer layer portion WG1 is a portion between the width direction counter portion WF and the first lateral surface S1. The second lateral surface-side outer layer portion WG2 is a portion between the width direction counter portion WF and the second lateral surface S2. The first lateral surface-side outer layer portion WG1 and the second lateral surface-side outer layer portion WG2 are also referred to as W gaps.

The first lateral surface-side outer layer portion WG1 and the second lateral surface-side outer layer portion WG2 are portions where no internal electrode layers exist in the lamination direction T. The first lateral surface-side outer layer portion WG1 is located adjacent to the first lateral surface S1. The first lateral surface-side outer layer portion WG1 includes a plurality of dielectric layers located between the first lateral surface S1 and the outermost surface of the width direction counter portion WF adjacent to the first lateral surface S1.

The second lateral surface-side outer layer portion WG2 is located adjacent to the second lateral surface S2. The second lateral surface-side outer layer portion WG2 includes a plurality of dielectric layers located between the second lateral surface S2 and the outermost surface of the width direction counter portion WF adjacent to the second lateral surface S2.

### (Internal Electrode Layer)

The internal electrode layers include a plurality of first internal electrode layers 6a and a plurality of second internal electrode layers 6b. The first internal electrode layers 6a are internal electrode layers exposed at the first end surface E1. The second internal electrode layers 6b are internal electrode layers exposed at the second end surface E2.

Each of the first internal electrode layers 6a can be divided into a first counter electrode portion 7a and a first extension electrode portion 8a. The first counter electrode portion 7a is a portion opposed to the second internal electrode layer 6b. The first extension electrode portion 8a is a portion extending from the first counter electrode portion 7a toward the first end surface E1 of the multilayer body 2.

The first extension electrode portion 8a includes an end portion adjacent to the first end surface E1, and the end portion extends toward the surface of the first end surface E1 of the multilayer body 2. The end portion of the first extension electrode portion 8a extending toward the first end surface E1 provides an exposed portion at the first end surface E1.

Each of the second internal electrode layers 6b can be divided into a second counter electrode portion 7b and a second extension electrode portion 8b. The second counter electrode portion 7b is a portion opposed to the first internal electrode layer 6a. The second extension electrode portion 8b is a portion extending from the second counter electrode portion 7b toward the second end surface E2 of the multilayer body 2.

The second extension electrode portion 8b includes an end portion adjacent to the second end surface E2, and the end portion extends toward the surface of the second end surface E2 of the multilayer body 2. The end portion of the second extension electrode portion 8b extending toward the second end surface E2 provides an exposed portion at the second end surface E2.

The shape of the first counter electrode portion 7a and the shape of the second counter electrode portion 7b are not particularly limited. The shape of the first counter electrode portion 7a and the shape of the second counter electrode portion 7b are preferably rectangular. The corner portions of the first counter electrode portion 7a and the corner portions of the second counter electrode portion 7b may be rounded. The corner portions of the first counter electrode portion 7a and the corner portions of the second counter electrode portion 7b may be provided obliquely. Being provided obliquely indicates being provided in a tapered shape.

The shape of the first extension electrode portion 8a and the shape of the second extension electrode portion 8b are not particularly limited. The shape of the first extension electrode portion 8a and the shape of the second extension electrode portion 8b are preferably rectangular. The corner portions of the first extension electrode portion 8a and the corner portions of the second extension electrode portion 8b may be rounded. The corner portions of the first extension electrode portion 8a and the corner portions of the second extension electrode portion 8b may be provided obliquely. Being provided obliquely indicates being provided in a tapered shape.

The width of the first counter electrode portion 7a and the width of the first extension electrode portion 8a may be the same. One of the width of the first counter electrode portion 7a or the width of the first extension electrode portion 8a may be narrower than the other.

The width of the second counter electrode portion 7b and the width of the second extension electrode portion 8b may be the same. One of the width of the second counter electrode portion 7b or the width of the second extension electrode portion 8b may be narrower than the other.

The materials of the first internal electrode layers 6a and the second internal electrode layers 6b may be, for example, metals such as Ni, Cu, Ag, Pd, and Au, or alloys containing at least one of these metals, such as Ag-Pd alloy, or other appropriate electrically conductive materials.

In the multilayer ceramic capacitor 1, capacitance is generated by the first counter electrode portion 7a and the second counter electrode portion 7b opposing each other with a corresponding one of the inner dielectric layers 4 interposed therebetween. This enables the multilayer ceramic capacitor 1 to develop capacitor characteristics.

The thickness of the first internal electrode layer 6a and the thickness of the second internal electrode layer 6b are preferably about 0.2 µm or more and 2.0 µm or less. The total number obtained by adding the number of the first internal electrode layers 6a and the number of the second internal electrode layers 6b is preferably 15 or more and 2000 or less.

### (Level difference Reduction Near End Surfaces)

The multilayer ceramic capacitor 1 includes the second dielectric layers 5b. The second dielectric layers 5b are dielectric layers provided in order to make the lamination direction dimension of the multilayer body 2 uniform.

Level difference reduction in the multilayer body 2 will be described with reference to FIG. 2. The difference between the lamination direction dimension of the multilayer body 2 in the length direction counter portion LF and the lamination direction dimension of the multilayer body 2 in the first end surface-side outer layer portion LG1 is preferably small. The difference between the lamination direction dimension of the multilayer body 2 in the length direction counter portion LF and the lamination direction dimension of the multilayer body 2 in the second end surface-side outer layer portion LG2 is preferably small.

However, in the inner layer range IL, the difference between the lamination direction dimension of the multilayer body 2 in the length direction counter portion LF and the lamination direction dimension of the multilayer body 2 in the first end surface-side outer layer portion LG1 is likely to be large. In the inner layer range IL, the difference between the lamination direction dimension of the multilayer body 2 in the length direction counter portion LF and the lamination direction dimension of the multilayer body 2 in the second end surface-side outer layer portion LG2 is likely to be large.

In the inner layer range IL, the inner dielectric layers 4, the first internal electrode layers 6a, and the second internal electrode layers 6b are laminated in the length direction counter portion LF.

Only the inner dielectric layers 4 and the first internal electrode layers 6a are laminated in the first end surface-side outer layer portion LG1. The second internal electrode layers 6b are not laminated in the first end surface-side outer layer portion LG1.

Only the inner dielectric layers 4 and the second internal electrode layers 6b are laminated in the second end surface-side outer layer portion LG2. The first internal electrode layers 6a are not laminated in the second end surface-side outer layer portion LG2.

The layers that are laminated are different between the length direction counter portion LF, and the first end surface-side outer layer portion LG1 and the second end surface-side outer layer portion LG2. Therefore, the lamination direction dimension is likely to differ between the length direction counter portion LF, and the first end surface-side outer layer portion LG1 and the second end surface-side outer layer portion LG2.

In order to reduce the difference in lamination direction dimension between the length direction counter portion LF, and the first end surface-side outer layer portion LG1 and the second end surface-side outer layer portion LG2, additional inner dielectric layers 4 are provided in the first end surface-side outer layer portion LG1 and the second end surface-side outer layer portion LG2. These additional inner dielectric layers 4 are defined as second dielectric layers 5b. In order to distinguish from the second dielectric layers 5b, the dielectric layers included in the multilayer body 2 other than the second dielectric layers 5b are defined as the first dielectric layers 5a.

The second dielectric layers 5b are provided between the length direction end portions of the first internal electrode layers 6a and the second end surface E2. The second dielectric layers 5b are provided between the length direction end portions of the second internal electrode layers 6b and the first end surface E1.

The main component of the second dielectric layers 5b is preferably the same as the main component of the first dielectric layers 5a. The components of the second dielectric layers 5b are not limited thereto.

### (Level difference Reduction Near Lateral Surfaces)

In the multilayer ceramic capacitor 1, the second dielectric layers 5b are also provided near the lateral surfaces. This will be described based on FIG. 3. The lamination direction dimension of the multilayer body 2 is preferably uniform not only in the length direction L, but also in the width direction W. In the inner layer range IL, in the width direction W as well as in the length direction L, the lamination direction dimension is likely to differ between the width direction counter portion WF, and the first lateral surface-side outer layer portion WG1 and the second lateral surface-side outer layer portion WG2.

In the inner layer range IL, the inner dielectric layers 4, the first internal electrode layers 6a, and the second internal electrode layers 6b are laminated in the width direction counter portion WF.

The first internal electrode layers 6a and the second internal electrode layers 6b are not laminated in the first lateral surface-side outer layer portion WG1 and the second lateral surface-side outer layer portion WG2. Only the inner dielectric layers 4 are laminated in the first lateral surface-side outer layer portion WG1 and the second lateral surface-side outer layer portion WG2.

The laminated layers differ between the width direction counter portion WF, and the first lateral surface-side outer layer portion WG1 and the second lateral surface-side outer layer portion WG2. Therefore, the lamination direction dimension is likely to differ between the width direction counter portion WF, and the first lateral surface-side outer layer portion WG1 and the second lateral surface-side outer layer portion WG2.

In order to reduce the difference in lamination direction dimension between the width direction counter portion WF, and the first lateral surface-side outer layer portion WG1 and the second lateral surface-side outer layer portion WG2, additional inner dielectric layers 4 are provided in the first lateral surface-side outer layer portion WG1 and the second lateral surface-side outer layer portion WG2. These additional inner dielectric layers 4 are the second dielectric layers 5b.

The second dielectric layers 5b are provided between the end portions of the first internal electrode layers 6a and the second internal electrode layers 6b adjacent to the first lateral surface S1 in the width direction W and the first lateral surface S1. The second dielectric layers 5b are provided between the end portions of the first internal electrode layers 6a and the second internal electrode layers 6b adjacent to the second lateral surface S2 in the width direction W and the second lateral surface S2.

### (Inner Layer Portion)

The portion where the first internal electrode layers 6a and the second internal electrode layers 6b are opposed to each other is defined as an inner layer portion 10. The inner layer portion 10 is the portion where the length direction counter portion LF shown in FIG. 2 and the width direction counter portion WF shown in FIG. 3 intersect with the inner layer range IL. The shape of the inner layer portion 10 is approximately a rectangular parallelepiped. In FIG. 2, the portion where the length direction counter portion LF and the inner layer range IL intersect is shown as the inner layer portion 10. Also, in FIG. 3, the portion where the width direction counter portion WF and the inner layer range IL intersect is shown as the inner layer portion 10.

### (External Electrodes)

The external electrodes will be described. The external electrodes include the first external electrode 20a and the second external electrode 20b. The first external electrode 20a is connected to the first internal electrode layers 6a. The first external electrode 20a is provided on the first end surface E1, a portion of the first main surface M1, a portion of the second main surface M2, a portion of the first lateral surface S1, and a portion of the second lateral surface S2.

The second external electrode 20b is connected to the second internal electrode layers 6b. The second external electrode 20b is provided on the second end surface E2, a portion of the first main surface M1, a portion of the second main surface M2, a portion of the first lateral surface S1, and a portion of the second lateral surface S2.

The first external electrode 20a and the second external electrode 20b each preferably include a base electrode layer and a plated layer. The base electrode layer can include at least one layer selected from a fired layer, an electrically conductive resin layer, a thin film layer, and the like. The electrically conductive resin layer can be provided separately from the base electrode layer. A configuration including a fired layer functioning as the base electrode layer and an electrically conductive resin layer separately from the base electrode layer will be described as an example.

The first external electrode 20a includes a first base electrode layer 21a, a first electrically conductive resin layer 22a, a first lower plated layer 23a, and a first upper plated layer 24a. The second external electrode 20b includes a second base electrode layer 21b, a second electrically conductive resin layer 22b, a second lower plated layer 23b, and a second upper plated layer 24b.

The first base electrode layer 21a and the second external electrode 21b are layers including an electrically conductive metal and a glass component. The first electrically conductive resin layer 22a and the second electrically conductive resin layer 22b do not include a metal component. The first electrically conductive resin layer 22a and the second electrically conductive resin layer 22b are each made of a thermosetting resin. The first lower plated layer 23a and the second lower plated layer 23b may be, for example, Ni plated layers. The first upper plated layer 24a and the second upper plated layer 24b may be, for example, Sn plated layers.

### (Base Electrode Layer)

The base electrode layers include a first base electrode layer 21a and a second base electrode layer 21b. The first base electrode layer 21a is provided from the first end surface E1 to a portion of the first main surface M1 and a portion of the second main surface M2, and a portion of the first lateral surface S1 and a portion of the second lateral surface S2. The second base electrode layer 21b is provided from the second end surface E2 to a portion of the first main surface M1 and a portion of the second main surface M2, and a portion of the first lateral surface S1 and a portion of the second lateral surface S2.

The first base electrode layer 21a and the second base electrode layer 21b include an electrically conductive metal and a glass component. The electrically conductive metal is, for example, at least one of Cu, Ni, Ag, Pd, Ag-Pd alloy, Au, and the like. The glass component is at least one of B, Si, Ba, Mg, Al, Li, and the like.

The first base electrode layer 21a and the second base electrode layer 21b may include multiple layers. The first base electrode layer 21a and the second base electrode layer 21b may be formed by applying an electrically conductive paste containing the glass component and metal to the multilayer body, and then firing the paste. This firing may be performed simultaneously with firing of the internal electrode layers. This firing may be performed after firing the internal electrode layers.

When firing is performed simultaneously with firing of the internal electrode layers and dielectric layers, it is preferable to add dielectric material to the electrically conductive paste instead of the glass component. The first base electrode layer 21a and the second base electrode layer 21b are fired layers formed by firing.

The thickness of the first base electrode layer 21a at the middle position in the lamination direction of the first base electrode layer 21a located on the first end surface E1 is preferably, for example, about 10 µm or more and 150 µm or less. The thickness of the second base electrode layer 21b at the middle position in the lamination direction of the second base electrode layer 21b located on the second end surface E2 is preferably, for example, about 10 µm or more and 150 µm or less.

When the first base electrode layer 21a and the second base electrode layer 21b are provided on the first main surface M1 and the second main surface M2, and the first lateral surface S1 and the second lateral surface S2, the thickness of the first base electrode layer 21a or the second base electrode layer 21b at the middle position in the length direction of the first base electrode layer 21a or the second base electrode layer 21b located on the first main surface M1 and the second main surface M2, and the first lateral surface S1 and the second lateral surface S2 is preferably, for example, about 5 µm or more and 50 µm or less.

When the base electrode layer is a thin film layer, the thin film layer can be formed by a thin film forming method such as a sputtering method or vapor deposition method. The formed thin film layer is a layer on which metal particles are deposited. The thickness of the formed thin film layer is 1 µm or less.

### (Electrically Conductive Resin Layer)

An electrically conductive resin layer is provided on the base electrode layer. The electrically conductive resin layer includes a resin component and a metal component. The electrically conductive resin layer includes a first electrically conductive resin layer 22a and a second electrically conductive resin layer 22b. The first electrically conductive resin layer 22a and the second electrically conductive resin layer 22b include a thermosetting resin as a resin component. By including the resin component, the first electrically conductive resin layer 22a and the second electrically conductive resin layer 22b are more flexible than the base electrode layer. The base electrode layer does not include a resin component. The base electrode layer includes a plating film, a metal component, a glass component, and the like. The base electrode layer is a fired product. For these reasons, the base electrode layer is not flexible.

The electrically conductive resin layer functions as a buffer layer. Therefore, when a bending stress is applied to the mounting substrate and a physical shock is applied to the multilayer ceramic capacitor 1 due to this stress, cracks are less likely to occur in the multilayer ceramic capacitor 1. When a shock due to thermal cycling is applied to the multilayer ceramic capacitor 1, cracks are less likely to occur in the multilayer ceramic capacitor 1.

The thermosetting resin included in the electrically conductive resin layer may be, for example, various known thermosetting resins such as epoxy resin, phenol resin, urethane resin, silicone resin, and polyimide resin. Among these resins, epoxy resin is one of the most suitable resins. This is because epoxy resin has excellent heat resistance, moisture resistance, adhesion, and the like.

The first electrically conductive resin layer 22a is provided on the first base electrode layer 21a. The first electrically conductive resin layer 22a covers the first base electrode layer 21a. The end portion of the first electrically conductive resin layer 22a is preferably in contact with the multilayer body 2.

The second electrically conductive resin layer 22b is provided on the second base electrode layer 21b. The second electrically conductive resin layer 22b covers the second base electrode layer 21b. The end portion of the second electrically conductive resin layer 22b is preferably in contact with the multilayer body 2.

The metal component included in the first electrically conductive resin layer 22a and the second electrically conductive resin layer 22b can be Ag, Cu, Ni, Sn, Bi, or an alloy containing these metals. The form of the metal component is preferably a filler form. When the metal component is metal powder, metal powder having a surface coated with Sn, Ni, or Cu can be used. When metal powder having a surface coated with Sn, Ni, or Cu is used, the metal powder is preferably powder of Ag, Cu, Ni, Sn, Bi, or an alloy thereof. The metal component preferably includes Ag in particular. Ag may be Ag simple substance. Ag may be an alloy containing Ag or metal powder having a surface coated with Ag.

When a metal powder having a surface coated with Ag is used, it is preferable to use powder of Cu, Ni, Sn, Bi, or an alloy thereof as the metal powder. When Ag is used as the metal filler, there are the following advantages. Ag has the lowest specific resistance among metals. Ag can form electrodes with low electrical resistance. Ag is a noble metal. Ag is difficult to oxidize. Ag can increase the resistance of the electrically conductive resin layer. Using Ag as the metal filler can reduce the cost of the base metal, while maintaining the characteristics of Ag.

The shape of the metal filler included in the first electrically conductive resin layer 22a and the second electrically conductive resin layer 22b is not particularly limited. The shape of the metal filler may be spherical, flat, or the like. The metal filler may be a mixture of spherical metal powder and flat metal powder.

The average particle size of the metal filler included in the first electrically conductive resin layer 22a and the second electrically conductive resin layer 22b is not particularly limited. The average particle size of the metal filler can be, for example, 0.3 µm or more and 10 µm or less. The average particle size of the metal filler included in the electrically conductive resin layer can be determined by calculation using a laser diffraction particle size measurement method (based on ISO 13320). This method of determining the average particle size can be applied regardless of the shape of the filler.

The metal filler included in the first electrically conductive resin layer 22a and the second electrically conductive resin layer 22b enables the electrically conductive resin layer to conduct electricity. Contact between metal fillers forms a conduction path inside the electrically conductive resin layer.

The resin included in the first electrically conductive resin layer 22a and the second electrically conductive resin layer 22b may be, for example, various known thermosetting resins such as epoxy resin, phenoxy resin, phenol resin, urethane resin, silicone resin, and polyimide resin. Epoxy resin has excellent heat resistance, moisture resistance, adhesion, and the like. Epoxy resin is one of the most suitable resins.

The first electrically conductive resin layer 22a and the second electrically conductive resin layer 22b preferably include a curing agent in addition to the thermosetting resin. When epoxy resin is used as the base resin, the curing agent can be various known compounds such as phenolic, amine, acid anhydride, imidazole, active ester, and amide imide compounds.

The amount of metal included in the first electrically conductive resin layer 22a is preferably 35 vmol% or more and 75 vmol% or less with respect to the total volume of the first electrically conductive resin layer 22a. The amount of metal included in the second electrically conductive resin layer 22b is preferably 35 vmol% or more and 75 vmol% or less with respect to the total volume of the second electrically conductive resin layer 22b.

The amount of resin included in the first electrically conductive resin layer 22a is preferably 25 vmol% or more and 65 vmol% or less with respect to the total volume of the first electrically conductive resin layer 22a. The amount of resin included in the second electrically conductive resin layer 22b is preferably 25 vmol% or more and 65 vmol% or less with respect to the total volume of the second electrically conductive resin layer 22b.

The thickness of the first electrically conductive resin layer 22a or the second electrically conductive resin layer 22b located on the first end surface E1 or the second end surface E2 at the lamination direction middle position is preferably, for example, about 10 µm or more and 200 µm or less.

When the first electrically conductive resin layer 22a and the second electrically conductive resin layer 22b are provided on the first main surface M1 and the second main surface M2, as well as the first lateral surface S1 and the second lateral surface S2, the thickness of the electrically conductive resin layer at the length direction middle position of the first electrically conductive resin layer 22a or the second electrically conductive resin layer 22b located on the first main surface M1 and the second main surface M2, and the first lateral surface S1 and the second lateral surface S2 is preferably, for example, about 10 µm or more and 200 µm or less.

### (Plated Layer)

The plated layer will be described. The plated layer includes a lower plated layer and an upper plated layer. The plated layer includes two layers. The plated layer may include a single layer or a plurality of layers.

### (Lower Plated Layer)

The lower plated layer is provided on the electrically conductive resin layer. The lower plated layer covers at least a portion of the electrically conductive resin layer. The lower plated layer includes a first lower plated layer 23a and a second lower plated layer 23b. The first lower plated layer 23a is provided on the first electrically conductive resin layer 22a. The second lower plated layer 23b is provided on the second electrically conductive resin layer 22b.

The first lower plated layer 23a and the second lower plated layer 23b may be Ni plated layers. Making the lower plated layer an Ni plated layer reduces or prevents the base electrode layer and the like from being eroded by solder when mounting the multilayer ceramic capacitor 1.

### (Upper Plated Layer)

The upper plated layer is provided on the lower plated layer. The upper plated layer covers at least a portion of the lower plated layer. The upper plated layer includes a first upper plated layer 24a and a second upper plated layer 24b. The first upper plated layer 24a is provided on the first lower plated layer 23a. The second upper plated layer 24b is provided on the second lower plated layer 23b.

The first upper plated layer 24a and the second upper plated layer 24b can be Sn plated layers. The solder wettability of the Sn plated layer is favorable. Therefore, making the upper plated layer an Sn plated layer facilitates mounting of the multilayer ceramic capacitor 1 on a substrate or the like.

The metals of the materials of the lower plated layer and the upper plated layer are not particularly limited. The plated layer, including the lower plated layer and the upper plated layer, can include at least one metal such as Cu, Ni, Ag, Pd, Au and Sn, and alloys such as Ag-Pd alloy, for example.

The thickness of each layer of the plated layer is preferably 2 µm or more and 15 µm or less.

It is also possible not to provide any base electrode layer. It is also possible to form the external electrodes with only the plated layer. A case where only the plated layer is provided without providing any base electrode layer will be described.

The first external electrode 20a and the second external electrode 20b are directly formed on the surface of the multilayer body 2. The first external electrode 20a and the second external electrode 20b are plated layers. The multilayer ceramic capacitor 1 includes plated layers electrically connected to the first internal electrode layer 6a or the second internal electrode layer 6b. Pretreatment can be performed before forming the plated layer. The pretreatment is, for example, to provide a catalyst on the surface of the multilayer body 2.

The plated layer preferably includes a lower plated electrode and an upper plated electrode. The lower plated electrode is a plated electrode formed on the surface of the multilayer body 2. The upper plated electrode is a plated electrode formed on the surface of the lower plated electrode. The lower plated electrode and the upper plated electrode preferably include at least one metal selected from Cu, Ni, Sn, Pb, Au, Ag, Pd, Bi and Zn, or an alloy containing such metals, for example.

The lower plated electrode is preferably formed using Ni. The solder barrier performance of Ni is favorable. The upper plated electrode is preferably formed using Sn or Au. The solder wettability of Sn and Au is favorable.

When the first internal electrode layer and the second internal electrode layer are formed using Ni, the lower plated electrode is preferably formed using Cu. The bonding property of Cu with Ni is favorable. The upper plated electrode can be formed as necessary. The first external electrode 20a and the second external electrode 20b may be formed only by the lower plated electrode.

The outermost layer of the plated layer may be the upper plated electrode. Another plated electrode may be further formed on the surface of the upper plated electrode. When the plated layer is provided without providing any base electrode layer, the preferred thickness per layer of the plated layer is 1 µm or more and 15 µm or less. The plated layer preferably does not include glass. The preferred metal ratio per unit volume of the plated layer is 99% by volume or more.

The size of the multilayer ceramic capacitor 1 is not particularly limited. The preferred length direction dimension of the multilayer ceramic capacitor 1 including the multilayer body 2 and the external electrodes is 0.2 mm or more and 10 mm or less. The preferred lamination direction dimension of the multilayer ceramic capacitor 1 including the multilayer body 2 and the external electrodes is 0.1 mm or more and 5 mm or less. The preferred width direction dimension of the multilayer ceramic capacitor 1 including the multilayer body 2 and the external electrodes is 0.1 mm or more and 10 mm or less.

### (Manufacturing Method of Multilayer Ceramic Capacitor)

A manufacturing method of the multilayer ceramic capacitor 1 will be described.
(1) Prepare a dielectric sheet and an electrically conductive paste for manufacturing internal electrode layers. The dielectric sheet and the electrically conductive paste for manufacturing internal electrode layers include a binder and a solvent. The binder and the solvent may be known organic binders and organic solvents.
(2) Print the electrically conductive paste for manufacturing internal electrode layers on the dielectric sheet in predetermined patterns. The internal electrode layer pattern is formed by printing the electrically conductive paste. The printing can be performed by, for example, screen printing or gravure printing.
(3) Laminate a predetermined number of dielectric sheets for manufacturing the outer layer portion. No internal electrode layer pattern is printed on the dielectric sheets for manufacturing the outer layer portion. Dielectric sheets with printed internal electrode layer patterns are sequentially laminated on the laminated dielectric sheets. Furthermore, a predetermined number of dielectric sheets for manufacturing the outer layer portion are laminated thereon. A multilayer sheet is produced by these lamination processes.

The second dielectric layer 5b will be described. The second dielectric layer 5b is provided in order to reduce level differences of the multilayer body 2. The dielectric paste that functions as the second dielectric layer 5b is referred to as a level difference reduction paste.

The level difference reduction paste is applied to regions around the internal electrode layer pattern on the dielectric sheet on which the internal electrode layer pattern is printed. The level difference reduction paste is applied to portions where no internal electrode layer pattern is formed. This is because the level difference reduction paste is a paste used in order to eliminate level differences between the internal electrode layer pattern and its surrounding regions. The level difference reduction paste can be applied so as to overlap with end portions of the internal electrode layer pattern. The overlap width can be set to, for example, approximately 50 µm. The level difference reduction paste can be applied such that gaps are formed between the level difference reduction paste and the internal electrode layer pattern. The width of the gaps can be, for example, 50 µm.

The level difference reduction paste may be the same as the ceramic paste used when manufacturing the dielectric sheet. The level difference reduction paste may be different from the ceramic paste used when manufacturing the dielectric sheet.

(4) Manufacture a multilayer block by pressing the multilayer sheet in the lamination direction. A hydrostatic press can be used for the pressing method.

(5) Cut the multilayer block to a predetermined size. Multilayer chips are cut out by this cutting. The corner portions and ridge portions of each of the multilayer chips may be rounded during cutting. Barrel polishing can be used for the method for rounding.

(6) Fire the multilayer chips. Multilayer bodies are manufactured by this firing. The preferred firing temperature is 900°C or more and 1200°C or less. The firing temperature can be changed according to the materials of the dielectric and the internal electrode layer.

External electrodes are provided on the multilayer body. (7) Apply electrically conductive paste for a base electrode to both end surfaces of the multilayer body. The electrically conductive paste includes a glass component and metal. A dipping method can be used for the application, for example. After the application, firing treatment is performed. The base electrode layer is formed by this firing treatment. The preferred temperature for the firing treatment is 700°C or more and 900°C or less. The base electrode layer is a fired layer.

(8) Form the electrically conductive resin layer on the base electrode layer. An electrically conductive resin paste is prepared. The electrically conductive resin paste includes a resin component and a metal component. The electrically conductive resin paste is applied on the base electrode layer. A dipping method can be used for the application method. After the application, heat treatment is performed. The temperature of the heat treatment is 200°C or more and 550°C or less. The resin is thermally cured by this heat treatment. The electrically conductive electrode layer is formed by this thermal curing. The atmosphere during the heat treatment is preferably a nitrogen gas atmosphere. The preferred oxygen concentration is 100 ppm or less. This oxygen concentration makes it difficult for the resin to scatter. This oxygen concentration makes it difficult to oxidize various metal components.

(9) After forming the electrically conductive resin layer, form a Ni plated layer on the surface of the electrically conductive resin layer. This Ni plated layer functions as the first lower plated layer and the second lower plated layer. An electrolytic plating method can be used for the method for forming the Ni plated layer. The preferred plating method is barrel plating.

(10) Form a Sn plated layer on the Ni plated layer. The first Sn plated layer is formed on the first Ni plated layer. The second Sn plated layer is formed on the second Ni plated layer. By forming the Sn plated layer, it is possible to improve the wettability of the solder used for mounting when the multilayer ceramic capacitor 1 is mounted on a substrate or the like. This facilitates mounting the multilayer ceramic capacitor 1 on a substrate or the like. An electrolytic plating method can be used for the method for forming the Sn plated layer. The preferred plating method is barrel plating.

### (Lamination Direction Dimension and Width Direction Dimension)

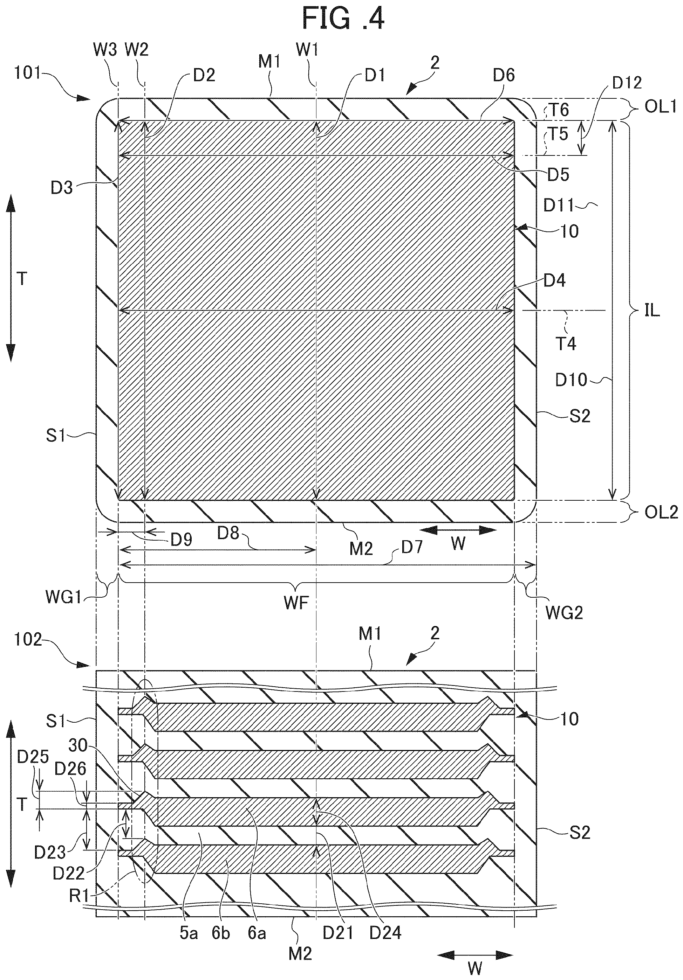

The dimension of each portion of the inner layer portion 10 of the multilayer ceramic capacitor 1 will be described based on FIG. 4. Reference numeral 101 in FIG. 4 refers to a cross-sectional view taken along the line III-III in FIG. 1. Reference numeral 101 in FIG. 4 refers to a WT cross-sectional view of the multilayer body 2 at a middle position in the length direction of the multilayer body 2.

### (Lamination Direction Length)

The lamination direction length of the inner layer portion 10 will be described. The width direction length of the inner layer portion 10 is indicated by length D7. The width direction end portion of the inner layer portion 10 is indicated by line W3. Half the length of length D7 is defined as length D8. A position separated by length D8 from the width direction end portion W3 toward the other width direction end portion of the inner layer portion 10 in the width direction W is indicated by line W1. The position of line W1 refers to the width direction middle position.

A length corresponding to 0.3% or more and 8.0% or less of length D7 is defined as length D9. In other words, a position where the length from the end portion in the width direction W of the inner layer portion 10 in a direction parallel to the other end portion in the width direction W of the inner layer portion 10 is 0.3% or more and 8.0% or less of the length of the inner layer portion 10 in the width direction W is a position included in the range of length D9. A position separated by length D9 from the width direction end portion W3 toward the other width direction end portion of the inner layer portion 10 in the width direction W is indicated by line W2. The position of line W2 is defined as an end portion vicinity position W2 of the inner layer portion 10 in the width direction W. The end portion vicinity position W2 in the width direction W is defined as a width direction end portion vicinity position W2.

The lamination direction length of the inner layer portion 10 at the width direction middle position W1 is defined as first length D1. The lamination direction length of the inner layer portion 10 at the width direction end portion vicinity position W2 is defined as second length D2. The lamination direction length of the inner layer portion 10 at the width direction end portion W3 is defined as third length D3.

### (Lamination Direction Length at Width Direction End Portion Vicinity Position)

The second length D2 is longer than the first length D1. The lamination direction length of the inner layer portion 10 is longer at the width direction end portion vicinity position W2 than at the width direction middle position W1.

The second length D2 is 102.6% or less of the first length D1. Alternatively, the second length D2 is longer than the first length D1, and the difference between the second length D2 and the first length D1 is 30 µm or less.

### (Lamination Direction Length at Width Direction End Portion)

The third length D3 is shorter than the first length D1. The lamination direction length of the inner layer portion 10 is shorter at the width direction end portion W3 than at the width direction middle position W1.

In summary, the lamination direction length of the inner layer portion 10 satisfies the following relationship: width direction end portion vicinity position W2 > width direction middle position W1 > width direction end portion W3.

The width direction length of the inner layer portion 10 will be described. The lamination direction length of the inner layer portion 10 is indicated by length D10. The lamination direction end portion of the inner layer portion 10 is indicated by line T6. Half the length of length D10 is defined as length D11. A position separated by length D11 from the lamination direction end portion T6 toward the other lamination direction end portion of the inner layer portion 10 in the lamination direction T is indicated by line T4. The position of line T4 is the lamination direction middle position.

A length corresponding to 10% or more and 40% or less of length D10 is defined as length D12. A position separated by length D12 from the lamination direction end portion T6 toward the other lamination direction end portion of the inner layer portion 10 in the lamination direction T is indicated by line T5. The position of line T5 is defined as a lamination direction end portion vicinity position T5 of the inner layer portion 10.

The width direction length of the inner layer portion 10 at the lamination direction middle position T4 is defined as a fourth length D4. The width direction length of the inner layer portion 10 at the lamination direction end portion vicinity position T5 is defined as a fifth length D5. The width direction length of the inner layer portion 10 at the lamination direction end portion T6 is defined as a sixth length D6.

The fifth length D5 is shorter than the fourth length D4. The width direction length of the inner layer portion 10 is shorter at the lamination direction end portion vicinity position T5 than at the length direction middle position T4.

The fifth length D5 is 97.5% or more and less than 100% of the fourth length D4. Alternatively, the fifth length D5 is longer than the fourth length D4, and the difference between the fifth length D5 and the fourth length D4 is 30 µm or less.

The sixth length D6 is shorter than the fifth length D5. The width direction length of the inner layer portion 10 is shorter at the lamination direction end portion T6 than at the lamination direction end portion vicinity position T5.

In summary, the width direction length of the inner layer portion 10 satisfies the following relationship: lamination direction middle position T4 > lamination direction end portion vicinity position T5 > lamination direction end portion T6.

### (Protruding Portion)

Reference number 102 in FIG. 4 is a view showing an enlarged portion of the inner layer portion 10. As shown in the broken line frame R1 of 102 in FIG. 4, at the width direction end portion vicinity position W2, the first internal electrode layer 6a and the second internal electrode layer 6b protrude from the second main surface M2 side toward the first main surface M1 in the lamination direction T. For one internal electrode layer, a portion of the internal electrode layer that is located closer to the first main surface M1 at the width direction end portion vicinity position W2 than the position at the width direction middle position W1 adjacent to the first main surface M1 in the lamination direction T is defined as a protruding portion 30. The protruding portion 30 is formed by the internal electrode layer overlapping with the second dielectric layer 5b. Due to the existence of the protruding portion 30, the lamination direction length at the width direction end portion vicinity position W2 of the inner layer portion 10 is longer than the lamination direction length at the width direction middle position W1.

### (Dielectric Layer)

The lamination direction dimension of each layer will be described based on 102 in FIG. 4. The lamination direction dimension of each layer indicates the thickness of each layer. The lamination direction dimension of the dielectric layer will be described. The lamination direction dimension of the first dielectric layer 5a at the width direction middle position W1 is defined as length D21. The lamination direction dimension of the second dielectric layer 5b at the width direction end portion vicinity position W2 is defined as length D22. The lamination direction dimension of the second dielectric layer 5b at the width direction end portion W3 is defined as length D23.

The lamination direction dimension of the dielectric layer is longer at the width direction end portion vicinity position W2 than at the width direction middle position W1. The length D22 is longer than the length D21.

The lamination direction dimension of the dielectric layer is longer at the width direction end portion W3 than at the width direction end portion vicinity position W2. The length D23 is longer than the length D22.

### (Internal Electrode Layer)

The lamination direction dimension of the internal electrode layers will be described. The internal electrode layers will be described using the first internal electrode layer 6a as an example. The content described using the first internal electrode layer 6a as an example is the same for the second internal electrode layer 6b. The lamination direction dimension of the first internal electrode layer 6a at the width direction middle position W1 is defined as length D24. The lamination direction dimension of the first internal electrode layer 6a at the width direction end portion vicinity position W2 is defined as length D25. The lamination direction dimension of the first internal electrode layer 6a at the width direction end portion W3 is defined as length D26.

The lamination direction dimension of the first internal electrode layer 6a is shorter at the width direction end portion vicinity position W2 than at the width direction middle position W1. The length D25 is shorter than the length D24.

The lamination direction dimension of the first internal electrode layer 6a is shorter at the width direction end portion W3 than at the width direction end portion vicinity position W2. The length D26 is shorter than the length D25.

### (Lamination Direction Length of Element)

One dielectric layer and one internal electrode layer in contact with this dielectric layer are combined to form one element. The sum of the lamination direction length of the dielectric layer included in one element and the lamination direction length of the internal electrode layer included in one element is defined as the lamination direction length of the element. The lamination direction length of the element at the width direction middle position W1 is the sum of the length D21 and the length D24. The lamination direction length of the element at the width direction end portion vicinity position W2 is the sum of the length D22 and the length D25. The lamination direction length of the element at the width direction end portion W3 is the sum of the length D23 and the length D26.

### (Width Direction End Portion Vicinity Position)

The increase amount of the length D22 from the length D21 in the dielectric layer is greater than the decrease amount of the length D25 from the length D24 in the internal electrode layer. Therefore, the lamination direction dimension of the element is longer at the width direction end portion vicinity position W2 than at the width direction middle position W1. As a result, the lamination direction dimension of the inner layer portion 10 is longer at the width direction end portion vicinity position W2 than at the width direction middle position W1.

### (Width Direction End Portion)

The increase amount of the length D23 from the length D21 in the dielectric layer is smaller than the decrease amount of the length D26 from the length D24 in the internal electrode layer. Therefore, the lamination direction dimension of the element is shorter at the width direction end portion W3 than at the width direction middle position W1. As a result, the lamination direction dimension of the inner layer portion 10 is shorter at the width direction end portion W3 than at the width direction middle position W1.

### (Capacitance)

In the multilayer ceramic capacitor 1, the second length D2 is longer than the first length D1, which makes it possible to increase the capacitance of the multilayer ceramic capacitor 1. By increasing the lamination direction length of the inner layer portion 10 at the width direction end portion vicinity position W2, it is possible to increase the lamination direction length of the internal electrode layers included therein at the width direction end portion vicinity position W2. When the lamination direction length of the internal electrode layers increases, the capacitance increases. In the multilayer ceramic capacitor 1, the lamination direction length of the internal electrode layers does not decrease rapidly in two stages from the length D24 at the width direction middle position W1 to the length D26 at the width direction end portion W3 as approaching from the width direction middle position W1 toward the width direction end portion W3. The lamination direction length of the internal electrode layers becomes equivalent to the length D25 at the width direction end portion vicinity position W2 between the width direction middle position W1 and the width direction end portion W3, which is longer than the length D26 at the width direction end portion W3. This is because the presence of the protruding portion 30 increases the lamination direction length of the internal electrode layers at the width direction end portion vicinity position W2.

The lamination direction length of the internal electrode layers is longer at the width direction end portion vicinity position W2 than at the width direction end portion W3. Therefore, it is possible to generate greater capacitance in the inner layer portion 10.

By forming a portion where the lamination direction length of the internal electrode layers is long at the width direction end portion vicinity position W2, it is possible to generate capacitance with high accuracy. This makes it possible to increase the accuracy of the capacitance generated by the multilayer ceramic capacitor 1.

In the process of manufacturing the multilayer ceramic capacitor 1, the multilayer sheets may be pressed in the lamination direction T. From this pressing, the lamination direction length of the inner layer portion 10 may become shorter at the width direction end portion W3 than at the width direction middle position W1. When the lamination direction length of the inner layer portion 10 at the width direction end portion W3 becomes shorter, the reliability of the multilayer ceramic capacitor 1 may decrease. In order to prevent the lamination direction length of the inner layer portion 10 at the width direction end portion W3 from becoming shorter, the lamination direction length of the inner layer portion 10 at the width direction middle position W1 may be increased. In order to increase the lamination direction length of the inner layer portion 10 at the width direction middle position W1, for example, it is conceivable to increase the lamination direction length of the dielectric layers. Increasing the lamination direction length of the dielectric layers becomes a factor that decreases the capacitance of the multilayer ceramic capacitor 1.

In the multilayer ceramic capacitor 1, a portion is provided where the lamination direction length of the inner layer portion 10 becomes longer at the width direction end portion vicinity position W2 than at the width direction end portion W3. Therefore, it is possible to reduce or prevent a decrease in the length direction length of the inner layer portion 10 at the width direction end portion W3. For this reason, it is not necessary to increase the lamination direction length of the inner layer portion 10 at the width direction middle position W1. This means that it is not necessary to increase the lamination direction length of the dielectric layers. Therefore, in the multilayer ceramic capacitor 1, it is possible to increase the capacitance.

### (Strength)

In the multilayer ceramic capacitor 1, since the second length D2 is longer than the first length D1, it is possible to improve the electrical strength of the multilayer ceramic capacitor 1. The multilayer ceramic capacitor 1 may be exposed to a strong electric field, particularly at the end portions. When the multilayer ceramic capacitor 1 is exposed to a strong electric field, dielectric breakdown may occur in the multilayer ceramic capacitor 1. In the multilayer ceramic capacitor 1, the lamination direction length of the dielectric layers is longer at the width direction end portion vicinity position W2 than at the width direction middle position W1. Furthermore, the lamination direction length of the dielectric layers is longer at the width direction end portion W3 than at the width direction end portion vicinity position W2.

Therefore, the multilayer ceramic capacitor 1 of the present disclosure has enhanced strength against electric fields, particularly at the end portions.

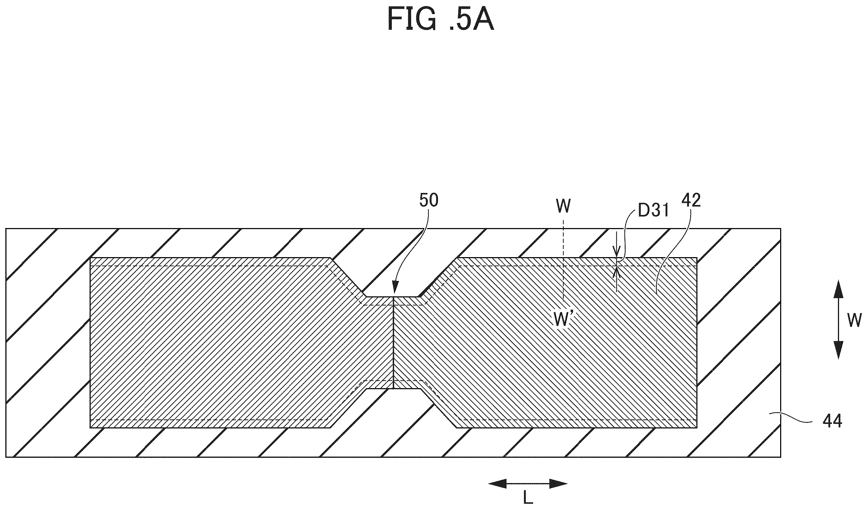

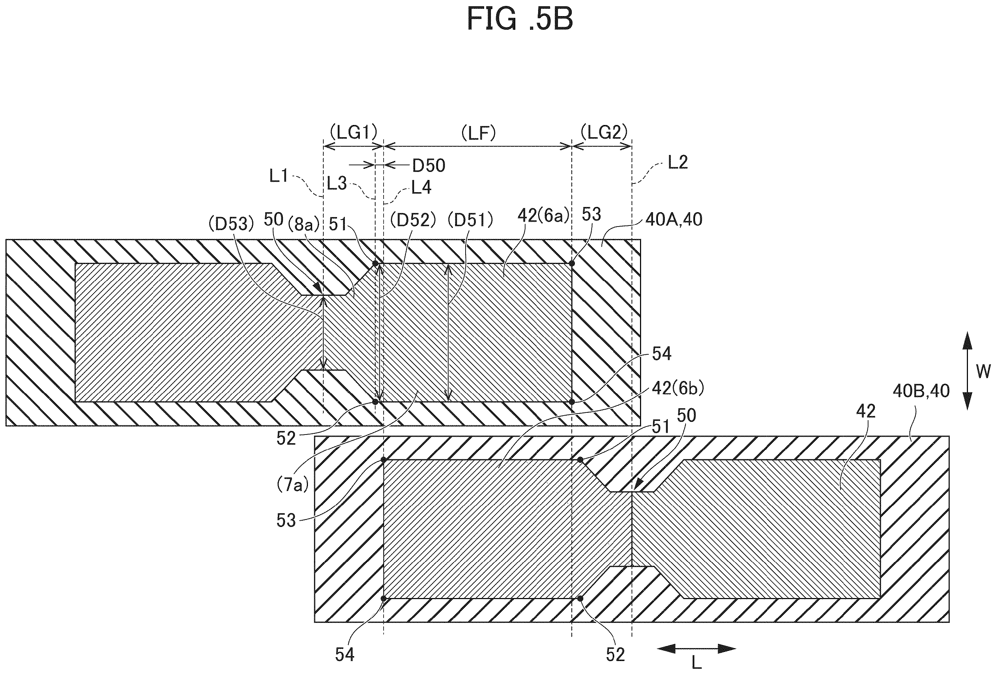

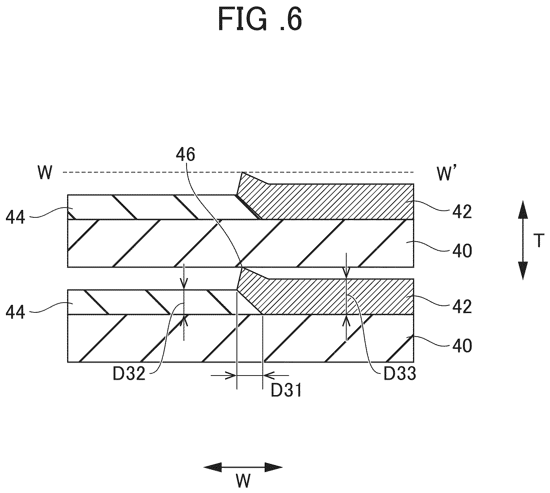

Based on FIGS. 5A, 5B, and 6, a manufacturing method of the multilayer ceramic capacitor 1 will be described in more detail. A step of printing an electrically conductive paste for manufacturing internal electrode layers in a predetermined pattern on a dielectric sheet will be described. FIG. 5A is a diagram showing a state in which an electrically conductive paste 42 for manufacturing internal electrode layers and a level difference reduction paste 44 are printed on a dielectric sheet. FIG. 5A is a top view of a surface parallel to the length direction L and the width direction W. FIG. 5B is a diagram showing two dielectric sheets 40 to be laminated. FIG. 6 is a cross-sectional view taken along the line W-W' in FIG. 5A.

As shown in FIG. 5A, the electrically conductive paste 42 for manufacturing internal electrode layers is printed on the dielectric sheet in a predetermined pattern. The dielectric sheet is not shown in FIG. 5A. The dielectric sheet 40 is shown in FIGS. 5B and 6. In the internal electrode layer pattern shown in FIG. 5A, recessed portions 50 are provided at both width direction end portions in the vicinity of the middle position in the length direction. The recessed portions 50 each refer to a portion where a portion of the outer shape of the internal electrode layer pattern is cut away. The structure of the internal electrode layer pattern provided with the recessed portions 50 is also referred to as a racket structure. The internal electrode layer pattern is not limited to this racket structure. The internal electrode layer pattern may also be a pattern without the recessed portions 50.

The level difference reduction paste 44 is provided around the pattern of the electrically conductive paste 42 for manufacturing internal electrode layers. The level difference reduction paste 44 is printed on the dielectric sheet 40 before the electrically conductive paste 42 for manufacturing internal electrode layers is printed on the dielectric sheet 40.

The electrically conductive paste 42 for manufacturing internal electrode layers is printed so that a portion thereof overlaps with the level difference reduction paste 44. This will be described based on FIG. 6. The width direction length of the portion where the electrically conductive paste 42 for manufacturing internal electrode layers overlaps with the electrically conductive paste 42 is indicated by length D31. The length D31 is referred to as the overlap length. The length of the overlap length D31 can be determined as appropriate. The length of the overlap length D31 can be, for example, 50 µm.

The configuration shown in FIG. 6, in which the electrically conductive paste 42 overlaps with the level difference reduction paste 44, indicates that the level difference reduction paste 44 is formed, following which the electrically conductive paste 42 is formed. When the electrically conductive paste 42 is formed after the formation of the level difference reduction paste 44, the positions of the end portions in the length direction L of the internal electrode layers are likely to be aligned in the subsequent multilayer body 2. This is because, when forming the electrically conductive paste 42, the level difference reduction paste 44 functions as a dam for the electrically conductive paste 42.

The formation order of the level difference reduction paste 44 and the electrically conductive paste 42 may be an order in which the electrically conductive paste 42 is formed, following which the level difference reduction paste 44 is formed . Even with such a formation order, it is possible to obtain the multilayer ceramic capacitor 1 having the preferred first length D1 and second length D2.

The portion where the electrically conductive paste 42 for manufacturing internal electrode layers overlaps with the level difference reduction paste 44 is defined as an overlap portion 46. This overlap portion 46 corresponds to the protruding portion 30 in the inner layer portion 10 shown as 102 in FIG. 4.

The printing thicknesses of the level difference reduction paste 44 and the electrically conductive paste 42 for manufacturing internal electrode layers will be described. The length D32 in FIG. 6 indicates the printing thickness of the level difference reduction paste 44. The length D33 in FIG. 6 indicates the printing thickness of the electrically conductive paste 42 for manufacturing internal electrode layers. The length D32 and the length D33 can be set as appropriate. The ratio of the length D32 to the length D33, that is, D32/D33, can be, for example, 0.5.

By appropriately setting the overlap length D31 and the value of D32/D33, it is possible to form the inner layer portion 10 having the configuration as shown in FIG. 4.

The length of the inner layer portion 10 in the width direction W can be manufactured so that D6 < D5 < D4 by loosely stacking without level difference countermeasures at the time of lamination, and locally pressing the outer layer portions into the gap portions using a rubber with a press.

Based on FIG. 5B, the lamination of the dielectric sheets 40 on which the electrically conductive paste 42 for manufacturing internal electrode layers is printed will be described. FIG. 5B shows two dielectric sheets 40 to explain the lamination method. The dielectric sheets 40 are sequentially laminated in a predetermined number by the lamination method shown in FIG. 5B.

The dielectric sheets 40 are laminated with their positions shifted in the length direction L every other sheet. The two dielectric sheets 40 to be laminated consecutively are defined as a first dielectric sheet 40A and a second dielectric sheet 40B. The second dielectric sheet 40B is laminated on the first dielectric sheet 40A in a state shifted in the length direction L by approximately half the length of the dielectric sheet 40 in the length direction L with respect to the first dielectric sheet 40A.

The laminate in which the dielectric sheets 40 are laminated in a predetermined number is cut at predetermined locations. In FIG. 5B, the cutting positions are indicated by lines L1 and L2. After cutting, the multilayer body 2 is obtained by firing the cut pieces.

In the state of the multilayer body 2, the electrically conductive paste 42 for manufacturing internal electrode layers that has been printed on the first dielectric sheet 40A functions as the first internal electrode layer 6a. On the other hand, the electrically conductive paste 42 for manufacturing internal electrode layers that has been printed on the second dielectric sheet 40B functions as the second internal electrode layer 6b.

In the electrically conductive paste 42 for manufacturing internal electrode layers, the starting points where the length in the width direction W becomes shorter to form the recessed portions 50 are defined as a first recessed portion end 51 and a second recessed portion end 52. The first recessed portion end 51 and the second recessed portion end 52 are located at positions opposed to each other in the width direction W. The line connecting the first recessed portion end 51 and the second recessed portion end 52 is indicated by line L3.

In the electrically conductive paste 42 for manufacturing internal electrode layers, the end portions in the length direction L are defined as a first rectangular end 53 and a second rectangular end 54. The first rectangular end 53 and the second rectangular end 54 are located at positions opposed to each other in the width direction W. The line connecting the first rectangular end 53 and the second rectangular end 54 is indicated by line L4.

In the multilayer ceramic capacitor 1 of the present embodiment, when laminating the first dielectric sheet 40A and the second dielectric sheet 40B, they are laminated so that line L3 and line L4 do not overlap. The direction in which line L3 is shifted from line L4 is a direction in which line L3 does not overlap with the electrically conductive paste 42 for manufacturing internal electrode layers printed on the dielectric sheet 40 to be laminated. In the example shown in FIG. 5B, line L3 is shifted in a direction in which line L3 of the first dielectric sheet 40A does not overlap with the electrically conductive paste 42 for manufacturing internal electrode layers printed on the second dielectric sheet 40B. In FIG. 5B, the length by which line L3 and line L4 are shifted is indicated by length D50.

In the multilayer ceramic capacitor 1 of the present embodiment, the dielectric sheets 40 are laminated so that line L3 and line L4 do not overlap. Therefore, in the multilayer body 2 after firing, the internal electrode layers are configured as follows. Hereinafter, the internal electrode layers will be described with reference to FIG. 5B when the electrically conductive paste 42 for manufacturing internal electrode layers shown in FIG. 5B functions as internal electrode layers by firing. In FIG. 5B, the reference numerals for the internal electrode layers are enclosed in parentheses.

In the multilayer ceramic capacitor 1 of the present embodiment, despite the formation of the recessed portions 50, the first extension electrode portion 8a of the first end surface-side outer layer portion LG1 has a portion where the length in the width direction W is the same as that of the first counter electrode portion 7a of the length direction counter portion LF. The portion indicated by length D50 is the portion where the length in the width direction W of the first extension electrode portion 8a becomes the same as the length in the width direction W of the first counter electrode portion 7a.

In FIG. 5B, the length in the width direction W of the first counter electrode portion 7a of the length direction counter portion LF is indicated by length D51. Also, regarding the length in the width direction W of the first extension electrode portion 8a of the first end surface-side outer layer portion LG1, it is indicated by length D52 within the range indicated by D50. Regarding the length in the width direction W of the first extension electrode portion 8a of the first end surface-side outer layer portion LG1, the length on line L1 is indicated by D53. Line L1 is a line corresponding to the end surface of the multilayer body 2. D52 is equal to D51. Also, D53 is shorter than D51 and D52. This is because the recessed portions 50 are formed.

By adopting the above-described configuration, it is possible to improve the reliability in the vicinity of the boundary between the first end surface-side outer layer portion LG1 and the length direction counter portion LF. Although the above description has been made using the first end surface-side outer layer portion LG1 as an example, the same applies to the second end surface-side outer layer portion LG2.

### (Measurement Method)

The length of each portion in the multilayer ceramic capacitor 1, the multilayer body 2, the inner layer portion 10, and the like can be measured with a micrometer or an optical microscope. For example, the multilayer ceramic capacitor 1 is polished to a desired position, such as to the middle position in the length direction. Then, the length can be measured by observing the cross section exposed by polishing with an optical microscope or the like.

Although embodiments of the present invention have been described above, the present invention is not limited thereto, and various changes and modifications are possible.

For example, the level difference reduction paste 44 may be printed on the dielectric sheet 40 after printing the electrically conductive paste 42 for manufacturing internal electrode layers on the dielectric sheet 40. The overlap between the electrically conductive paste 42 for manufacturing internal electrode layers and the level difference reduction paste 44 may be provided on sides along the width direction W, in addition to sides along the length direction L in the outer shape of the internal electrode layer pattern.

<1>
   A multilayer ceramic capacitor includes a multilayer body including a plurality of dielectric layers that are laminated, a plurality of first internal electrode layers and a plurality of second internal electrode layers each laminated on a corresponding one of the plurality of dielectric layers, a first main surface and a second main surface opposed to each other in a lamination direction, a first end surface and a second end surface opposed to each other in a length direction perpendicular to the lamination direction, and a first lateral surface and a second lateral surface opposed to each other in a width direction perpendicular to the lamination direction and the length direction, a first external electrode on the first end surface, and a second external electrode on the second end surface. The multilayer body includes an inner layer portion where the plurality of first internal electrode layers and the plurality of second internal electrode layers are opposed to each other, and outer layer portions each made of dielectric material. When defining a length in a direction parallel to the lamination direction of the inner layer portion at a middle position in the width direction of the inner layer portion as a first length, and defining a length in a direction parallel to the lamination direction of the inner layer portion at a position where a length from an end portion in the width direction of the inner layer portion in a direction parallel to one other end portion in the width direction of the inner layer portion is 0.3% or more and 8.0% or less of a length in the width direction of the inner layer portion as a second length, the second length is longer than the first length.
<2>
   In the multilayer ceramic capacitor as described in <1> above, the second length is 102.6% or less of the first length.
<3>
   In the multilayer ceramic capacitor as described in <1> above, the second length is longer than the first length, and a difference between the second length and the first length is 30 µm or less.
<4>
   In the multilayer ceramic capacitor as described in any one of <1> to <3> above, when defining a length in a direction parallel to the lamination direction of the inner layer portion at the end portion in the width direction of the inner layer portion as a third length, the third length is shorter than the first length.
<5>
   In the multilayer ceramic capacitor as described in any one of <1> to <4> above, when defining a length in a direction parallel to the width direction of the inner layer portion at a middle position in the lamination direction of the inner layer portion as a fourth length, and defining a length in a direction parallel to the width direction of the inner layer portion at a position where a length from an end portion in the lamination direction of the inner layer portion toward the middle position in the lamination direction of the inner layer portion is 10% or more and 40% or less of a length in the lamination direction of the inner layer portion as a fifth length, the fifth length is shorter than the fourth length.
<6>
   In the multilayer ceramic capacitor as described in <5> above, when defining a length in a direction parallel to the width direction of the inner layer portion at the end portion in the lamination direction of the inner layer portion as a sixth length, the sixth length is shorter than the fifth length.
<7>
   In the multilayer ceramic capacitor as described in any one of <1> to <6> above, when defining portions of the plurality of first internal electrode layers and the plurality of second internal electrode layers provided in the inner layer portion as counter electrode portions, and defining portions of the plurality of first internal electrode layers provided between the inner layer portion and the first end surface and portions of the plurality of the second internal electrode layers provided between the inner layer portion and the second end surface as extension electrode portions, a length in the width direction of the extension electrode portions at the first end surface or the second end surface is shorter than a length in the width direction of the counter electrode portions, and the extension electrode portions each include a portion having a length in the width direction that is the same as the length in the width direction of a corresponding one of the counter electrode portions.

### EXPLANATION OF REFERENCE NUMERALS

- 1: multilayer ceramic capacitor
- 2: multilayer body
- 3: outer dielectric layer
- 4: inner dielectric layer
- 5a: first dielectric layer
- 5b: second dielectric layer
- 6a: first internal electrode layer
- 6b: second internal electrode layer
- 10: inner layer portion
- 20a: first external electrode
- 20b: second external electrode
- 30: protruding portion
- 40: dielectric sheet
- 42: electrically conductive paste for manufacturing internal electrode layer
- 44: level difference reduction paste
- 46: overlap portion
- 50: recessed portion
- IL: inner layer range
- LF: length direction counter portion
- WF: width direction counter portion

## Claims

1. A multilayer ceramic capacitor comprising:
a multilayer body including a plurality of dielectric layers that are laminated, a plurality of first internal electrode layers and a plurality of second internal electrode layers each laminated on a corresponding one of the plurality of dielectric layers, a first main surface and a second main surface opposed to each other in a lamination direction, a first end surface and a second end surface opposed to each other in a length direction perpendicular to the lamination direction, and a first lateral surface and a second lateral surface opposed to each other in a width direction perpendicular to the lamination direction and the length direction;
a first external electrode on the first end surface; and
a second external electrode on the second end surface, wherein the multilayer body includes:
an inner layer portion where the plurality of first internal electrode layers and the plurality of second internal electrode layers are opposed to each other; and
outer layer portions each made of dielectric material, when defining a length in a direction parallel to the lamination direction of the inner layer portion at a middle position in the width direction of the inner layer portion as a first length, and defining a length in a direction parallel to the lamination direction of the inner layer portion at a position where a length from an end portion in the width direction of the inner layer portion in a direction parallel to one other end portion in the width direction of the inner layer portion is 0.3% or more and 8.0% or less of a length in the width direction of the inner layer portion as a second length,
the second length is longer than the first length.

2. The multilayer ceramic capacitor according to claim 1, wherein the second length is 102.6% or less of the first length.

3. The multilayer ceramic capacitor according to claim 1, wherein the second length is longer than the first length, and a difference between the second length and the first length is 30 µm or less.

4. The multilayer ceramic capacitor according to any one of claims 1 to 3, wherein, when defining a length in a direction parallel to the lamination direction of the inner layer portion at the end portion in the width direction of the inner layer portion as a third length, the third length is shorter than the first length.

5. The multilayer ceramic capacitor according to any one of claims 1 to 4, wherein, when defining a length in a direction parallel to the width direction of the inner layer portion at a middle position in the lamination direction of the inner layer portion as a fourth length, and defining a length in a direction parallel to the width direction of the inner layer portion at a position where a length from an end portion in the lamination direction of the inner layer portion toward the middle position in the lamination direction of the inner layer portion is 10% or more and 40% or less of a length in the lamination direction of the inner layer portion as a fifth length, the fifth length is shorter than the fourth length.

6. The multilayer ceramic capacitor according to claim 5, wherein, when defining a length in a direction parallel to the width direction of the inner layer portion at the end portion in the lamination direction of the inner layer portion as a sixth length, the sixth length is shorter than the fifth length.

7. The multilayer ceramic capacitor according to any one of claims 1 to 6, wherein, when defining portions of the plurality of first internal electrode layers and the plurality of second internal electrode layers provided in the inner layer portion as counter electrode portions, and defining portions of the plurality of first internal electrode layers provided between the inner layer portion and the first end surface, and portions of the plurality of the second internal electrode layers provided between the inner layer portion and the second end surface as extension electrode portions, a length in the width direction of the extension electrode portions at the first end surface or the second end surface is shorter than a length in the width direction of the counter electrode portions, and the extension electrode portions each include a portion having a length in the width direction that is the same as the length in the width direction of a corresponding one of the counter electrode portions.
